# EUROPEAN PATENT APPLICATION

(11) **EP 1 617 366 A2**
(43) Date of publication of application: **18.01.2006**
(21) Application number: 05076184.0
(22) Date of filing: 21.05.2005
(51) Int. Cl.: G06Q 10/00

(54) **Method and apparatus for in-product programming of product notice receiver**

(30) Priority: 22.05.2004 US 573544 P
(71) Applicant: J'maev, Jack I., Chino, CA 91710 (US)
(72) Inventor: J'maev, Jack I., Chino, CA 91710 (US)
(74) Representative: Andreeva, Natasha Petkova

(57) **Abstract**

A method for programming a product notice receiver by determining a digital identification number for the product notice receiver and programming the digital identification number into the product notice receiver after it is received by a host product manufacturer

## Description

### RELATED APPLICATIONS

This present application is a continuation-in-part of application serial number 10/615,412 filed on July 7, 2003, entitled "Method and Apparatus for Receiving Product Notices", which itself claims priority to Provisional Application 60/394,980 filed on July 9, 2002, entitled "Method and Apparatus for Product Recall", also by J'maev; this application further claims priority to provisional application 60/573,544 entitled "METHOD AND APPARATUS FOR IN-PRODUCT PROGRAMMING OF PRODUCT NOTICE RECEIVER" filed on May 22, 2004, currently pending, and is a which is hereby incorporated into this application by reference in its entirety, and for which priority date is herby claimed.

### BACKGROUND

Applicant has described a method and apparatus for issuing product notices in a product-centric manner in his co-pending patent application serial number 10/615, 483 filed on July 8, 2003, entitled "Method and Apparatus for Managing Product Notices". Applicant has also taught a method and described an apparatus for receiving product notices in his co-pending application serial number 10/615,412 filed on July 7, 2003, entitled "Method and Apparatus for Receiving Product Notices". These two application are incorporated herein by reference in their entirety.

An important aspect of manufacturing products that comprise a product notice receiver is the ability to program each product notice receiver in a manner that enables a particular notice receiver to receive a notice signal directed to a "target" product. A target product is a product that has a product notice receiver incorporated there in.

Currently, a product notice receiver as described in the second reference includes a digital identification number. This digital identification number must either be unique, or it must be programmed to a particular value for a particular manufactured lot of a "target" product. What this means is that a product notice receiver must be programmed by its maker at the time it is made or at the time it is shipped to a target product manufacturer.

The digital identifier programmed into each product notice receiver must be tracked and then correlated with a particular product and/or group of products. This single product, or a collection of like products is known as a target product group. Hence, when a notice signal needs to be issued to a product, e.g. from a central location, a correlation of the digital identifier to the target product group is needed to effectively signal the correct collection of product notice receivers. Such coordination is a monumental task and is prone to error since it is not easily automated.

To make matters worse, once a digital identifier is programmed into a product notice receiver integrated in a target product, there is yet additional coordination required in managing the actual physical inventory of target product that is produced. As the physical inventory is conveyed into the stream of commerce, there is additional coordination required to ensure that the product is properly tracked according to the digital identifier.

### SUMMARY OF THE INVENTION

A method for programming a product notice receiver by determining a digital identification number for the product notice receiver and programming the digital identification number into the product notice receiver after it is received by a host product manufacturer.

### BRIEF DESCRIPTION OF THE DRAWINGS

The foregoing aspects are better understood from the following detailed description of one embodiment of the invention with reference to the drawings, in which:
Fig. 1 is a flow diagram that depicts one example method for programming a product notice receiver;
Fig. 2 is a flow diagram that depicts one alternative method for determining a digital identification number;
Fig. 3 is a flow diagram that depicts yet another alternative method for determining a digital identification number;
Fig. 4 is a flow diagram that depicts one alternative example method for programming a digital identification number into a product notice receiver using a physical connection;
Fig. 5 is a flow diagram that depicts another illustrative method for programming a product notice receiver using a wireless connection;
Fig. 6 is a flow diagram that depicts one example method for receiving a product notice;
Fig. 7 is a flow diagram that depicts one alternative example method for receiving a digital identification number by wireless means;
Fig. 8 is a flow diagram that depicts additional steps in receiving a digital identification number by wireless means;
Fig. 9 is a flow diagram that depicts one alternative illustrative method for receiving to a product notice signal;
Fig. 10 is a flow diagram that depicts one alternative method for receiving verifying proper programming of product notice receiver;
Fig. 11 is a pictorial diagram that illustrates application of one example embodiment of a programming unit;
Fig. 12 is a block diagram of one example embodiment of a programming unit; and
Fig. 13 is a block diagram that depicts one example embodiment of a product notice receiver.

### DETAILED DESCRIPTION

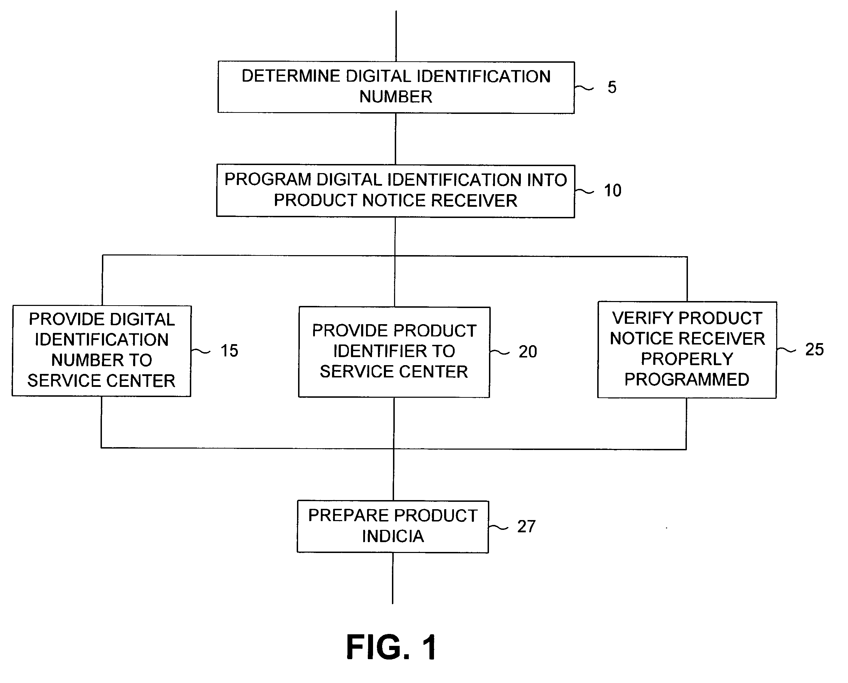

Fig. 1 is a flow diagram that depicts one example method for programming a product notice receiver. According to this example method, a product notice receiver is programmed by first determining a digital identification number (step 5). A digital identification number, as described in the incorporated references, is used to identify either a single product or a group of products. Hence, variations of the present method, as described in the incorporated references, provide for associating with the product notice receiver at least one of a product model number, a stock keeping unit (SKU) number, a lot code, a date code and a serial number. This list is intended to illustrate the present method, but is not intended to limit the scope of proposed claims appended hereto or the claims of the applications referenced and incorporated herein. Once the digital identification number is determined, it is programmed into the product notice receiver (step 10). According to yet another alternative example method, additional process steps are provided for ensuring that the product notice receiver has been properly programmed (step 25). It should be noted that the digital identification number can comprise any suitable digital number and, according to one variation of the present method, includes a product identifier. For example the digital identification number, according to yet another alternative method includes a product identifier in the form of at least one of a stock keeping unit number (i.e. "SKU"), a model number, a serial number, a lot number and a date code. These examples are intended to illustrate the present method and are not intended to limit the scope of the claims appended hereto.

According to one variation of the present method, the product digital identifier is assigned by a product manufacturer, or some other entity or organization. For example, the method of the present invention may be used by a product manufacturer when the manufacturer determines the product digital identifier. In the event that a service provider is used to issue a notice to the product, the service provider will need to know the product digital identifier. Hence, according to one alternative variation of the present method, the determined product digital identifier is provided to the service provider (step 15). According to one alternative variation of the present method, the product digital identifier is provided to the service center by means of a communications network (e.g. the Internet). According to yet another alternative variation of the present method, the product digital identifier is provided to the service center by means of an virtual private network established over a public network. According to yet another alternative variation of the present method, the product digital identifier is provided to the service center by means of an encrypted message conveyed to the service center as electronic mail. As another example, the electronic mail message need not be encrypted. These examples are intended to illustrate the present method and are not intended to limit the scope of the claims appended hereto.

According to one alternative example method, a product notice receiver is associated with some form of product identifier. For example, in the case where a product manufacturer determines a digital identification number, the manufacturer, unless the information is subsequently shared, is the only entity privy to the correlation of a particular product with the determined digital identification number. Accordingly, one alternative method further comprises providing a product identifier that corresponds to the digital identification number to the service provider (step 20). Various alternative methods provide for communicating the product identifier to the service provider by means of a communications network (as described *supra* relative to providing the digital identification number to the service provider), e.g. by Internet, by virtual private network established over a private network and by encrypted electronic mail message addressed to the service center. As another example, the electronic mail message need not be encrypted. This list of possible methods for communicating information to the service center is intended to illustrate the present method and is not intended to limit the scope of the claims approved hereto.

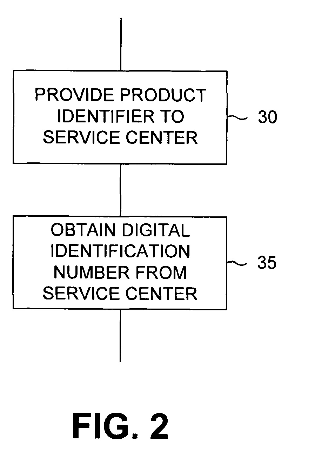

Fig. 2 is a flow diagram that depicts one alternative method for determining a digital identification number. Some manufacturing facilities that produce a target product may lack the sophistication necessary to generate a digital identification number for a product notice receiver integrated in a "target" product. In yet other applications of the present method, the service provider that is utilized for issuance of product notices to a product notice receiver may have a vested interest in assigning digital identification numbers to particular products on a system wide basis. For example, certain types of products may be more prone to recall events (an event when a manufacturer requests the issuance of a product notice signal). Accordingly, one method for receiving product notices in a product notice receiver is based on bandwidth allocations during particular time slots (e.g. see incorporated references). In any of these system operational scenarios, the digital identification number is generated by a service provider.

In order to generate the digital identification number, a product identifier for a particular product is conveyed to the service provider (step 30). Once the service center receives the product identifier, it generate a digital identification number that is then associated with the particular product identifier (step 35). In this context, the product identifier, according to one example method, comprises at least one of a stock keeping unit number (i.e. "SKU"), a model number, a serial number, a lot number and date code. These examples are intended to illustrate the present method and are not intended to limit the scope of the claims appended hereto. Communication to and from the service center can be accomplished by various means, including but not limited to communication over networks (as described *supra* relative to providing the digital identification number to the service provider), e.g. by Internet, by virtual private network established over a private network and by encrypted electronic mail message addressed to the service provider. As another example, the electronic mail message need not be encrypted. No Limit...

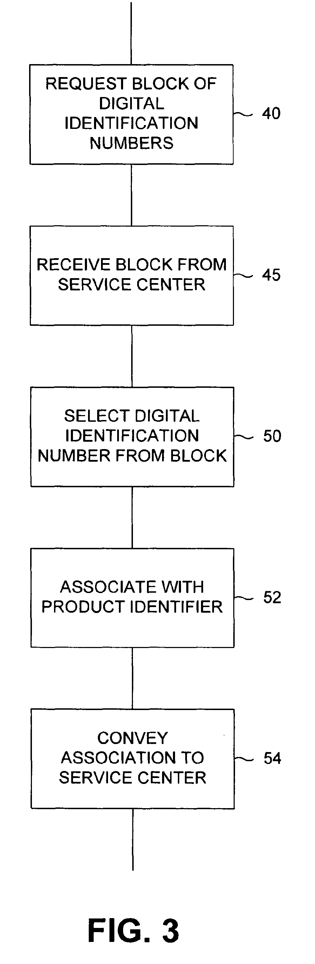

Fig. 3 is a flow diagram that depicts yet another alternative method for determining a digital identification number. Some manufacturers are able to assign digital identification numbers to a particular product. However, to facilitate system wide control of assignment of these numbers, one alternative variation of the present method provides for requesting a block of digital identification numbers from a service provider (step 40), Once the block is received (step 45), a digital identification number is selected from the block (step 50). Once the block is depleted, additional quantities of digital identification numbers can be requested from the service provider, again on a block basis. It should be noted, that according to one example variation of the present method, the step of requesting a block of digital identification numbers is optional. For example, a pre-determined quantity of digital identification numbers could be dispatched from a service provider on a regular basis. According to another alternative variation of the present method, an addition step is provided wherein the selected digital identification number is associated with a product identifier (step 52) and this association is communicated to the service center (step 54).

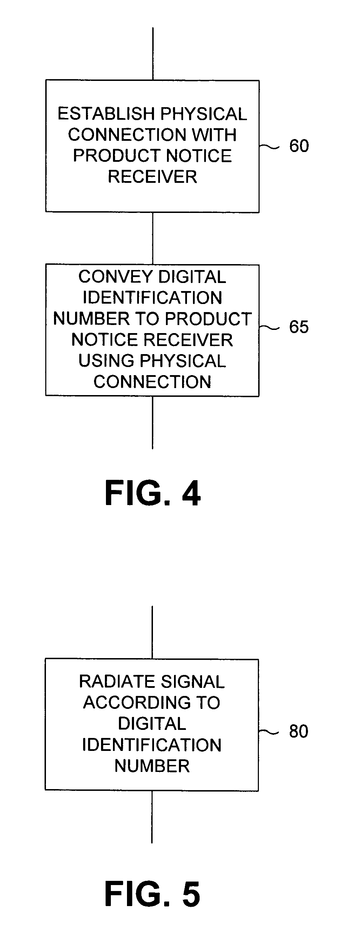

Fig. 4 is a flow diagram that depicts one alternative example method for programming a digital identification number into a product notice receiver using a physical connection. According to this example variation of the present method, a product notice receiver is programmed by establishing a physical connection with the product notice receiver (step 60). This can be accomplished, according to one variation of the present method, by contacting a pin on an integrated circuit component or by making an electrical connection with a module. Once the physical connection is established, the digital identification number is conveyed to the product notice receiver using the physical connection (step 65).

Fig. 5 is a flow diagram that depicts another illustrative method for programming a product notice receiver using a wireless connection. According to this alternative illustrative method, a radio-frequency (RF) signal is radiated. The signal is radiated in accordance with the digital identification number (step 80). According to one alternative method, the radiated signal is a short-range RF signal. According to yet another variation of this method, the radiated signal comprises a SmartChip compliant signal. It should be noted that the scope of the present method is to include all methods that utilize SmartChip wireless interfaces.. According to yet another illustrative variation of the present method, the radiation signal is compatible with Radio Frequency Identifier standards (RFID) used for inventory management. The nature of this interface may vary over time, but the scope of the proposed claims is intended to include all versions of the SmartChip interface, irrespective of whether they are published before, after or contemporaneously with this specifications

Fig. I further depicts that one alternative method of the present method further comprises a step for preparing product indicia (step 27). When a product notice receiver is integrated into a target product, the target product is typically heads to be identified somewhere in the production process. According to one illustrative variation of the present method, the target product indicia is placed on the target product. This is accomplished, for example, by methods including, but not limited to adhering the indicia to the product using an adhesive. Various means of adhering the indicia to the product may be utilized, and all such variations are intended to be included in the scope of the appended claims. Indicia, according to one example variation of the present method, includes information pertaining to at least one of a digital identification number, a stock keeping unit number (i.e. "SKU"), a model number, a serial number, a lot number and date code. These examples are intended to illustrate the scope of the present method and are not intended to limit the scope of the claims appended hereto.

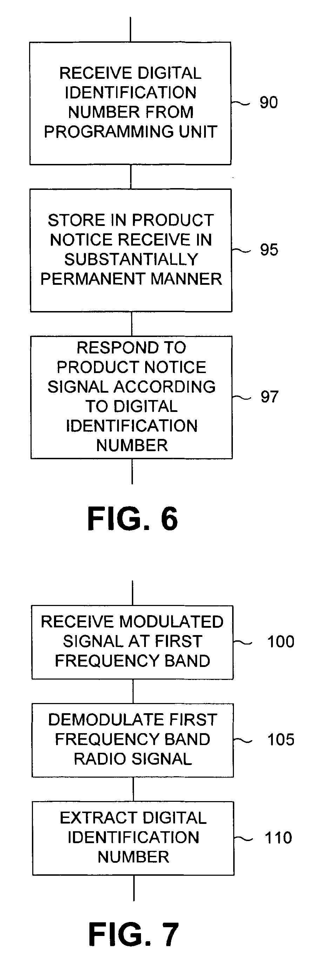

Fig. 6 is a flow diagram that depicts one example method for receiving a product notice. According to this example method, a product notice receiver is received by first receiving a digital identification number (step 90). The digital identification number is then stored in the product notice receiver in a substantially permanent manner (step 95). The product notice receiver is then made responsive to a product notice signal according to the digital identification number (step 97). According to one alternative method, the digital identification number is received in the product notice receiver by means of a physical interface. According to another alternative method, the digital identification number is received in the product notice receiver by means of a wireless interface. Storage in a substantially permanent manner includes, but is not necessarily united to storage in electronically programmable meaning.

Fig. 7 is a flow diagram that depicts one alternative example method for receiving a digital identification number by wireless means. According to this alternative example method, a digital identification number is received in a product notice receiver by receiving a modulated radio signal in a first frequency band (step 100). Then, the radio signal is demodulated (step 105). A digital identification number is extracted from the demodulated signal (step 110). According to one alternative method, the radio signal is demodulated in accordance with a SmartChip specification. In yet another alternative embodiment, the radio signal is demodulated in accordance with an RFID chip specification.

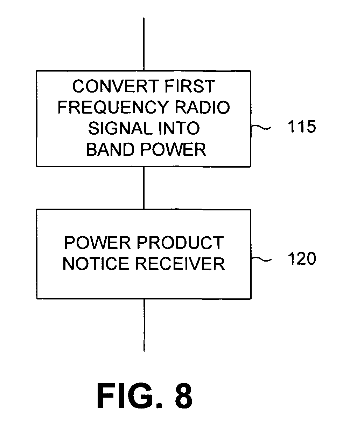

Fig. 8 is a flow diagram that depicts additional steps in receiving a digital identification number by wireless means. According to this alternative method, additional steps are provided for converting the radio signal in the first frequency band into power (step 115). The product notice receiver is then powered from the power derived from the radio frequency signal in the first frequency band (step 120). It should be noted that, according to one alternative variation of the present method, only a portion of a product notice receiver is powered in this manner. For example, power is provided to only that portion of a product notice receiver necessary to receive a digital identification number by way of the first frequency band radio signal and to store the number in a substantially permanent manner.

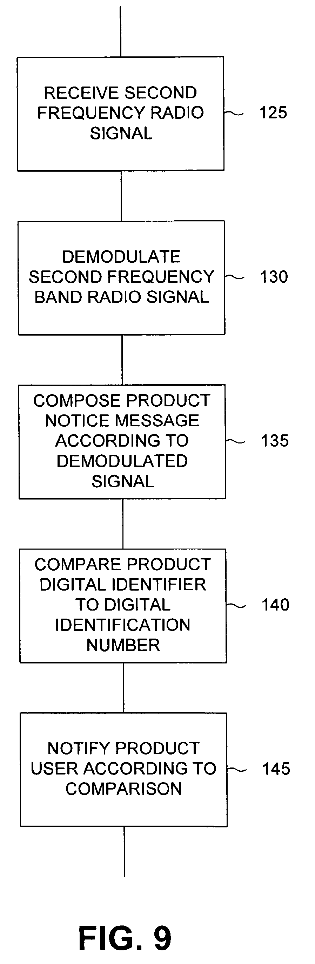

Fig. 9 is a flow diagram that depicts one alternative illustrative method for receiving to a product notice signal. According to this alternative method, a radio signal is received in a second frequency band (step 125). This second frequency band radio signal is then demodulated (step 130). According to various alternative methods, the demodulation comprises demodulation of at least one of amplitude modulation, phase modulation and frequency modulation. Any combination of these modulation types may be used.

A product notice message is composed as information is extracted from the demodulated second frequency band radio signal (step 135). Such a product notice message, according to one variation of the present method, includes a product digital identifier field (as described in the incorporated references). The digital identification number stored in the product notice receiver is compared to the value found in the product digital identifier field included in the product notice message (step 140). A product user is then notified according to the results of the comparison (step 145). Typically, such notification is only affected if the comparison is successful.

According to one example use case of the present method, the first frequency band is a short wavelength band, e.g. very high frequency (VHF), ultra high frequency (UHF) or other microwave signal. Generally, technologies such as Smart Chip and RFID chips use these short wavelength bands to enable short-range wireless connection. In the case of the second frequency band, one example use case of the present method utilizes long wave length frequencies, e.g. low frequency (LF) or high frequency (HF). The reason the second frequency band is selected as a long wavelength signal is to enable long-distance transmission connection. Hence, according to a conglomerated use case, a short wavelength signal is used to program a digital identification number into a product notice receiver. Once the product notice receiver is programmed, it is responsive to long wavelength signals that carry messages addressed according to the digital identification number. Accordingly, the short wavelength interface on the product notice receiver can be used in standard inventory management applications, such as inventory tracking and point-of-sale product recognition that are typically supported by SmartChips or RFID Chips.

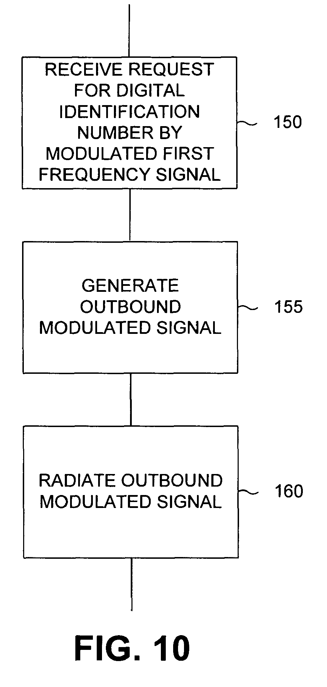

Fig. 10 is a flow diagram that depicts one alternative method for receiving verifying proper programming of product notice receiver. According to this alternative method, additional steps are provided for receiving a request for the digital identification number stored in a product notice receiver (step 150). In response to the request, this variation of the present method provides for generating an outbound modulated signal (step 155). The outbound modulated signal is modulated according to the digital identification number. According to one alternative method, the outbound signal is modulated in accordance with a Smart Chip specification. According to yet another alternative method, the outbound signal is modulated according to an RFID chip standard. Once generated, the outbound modulated signal is radiated in to free space (step 160).

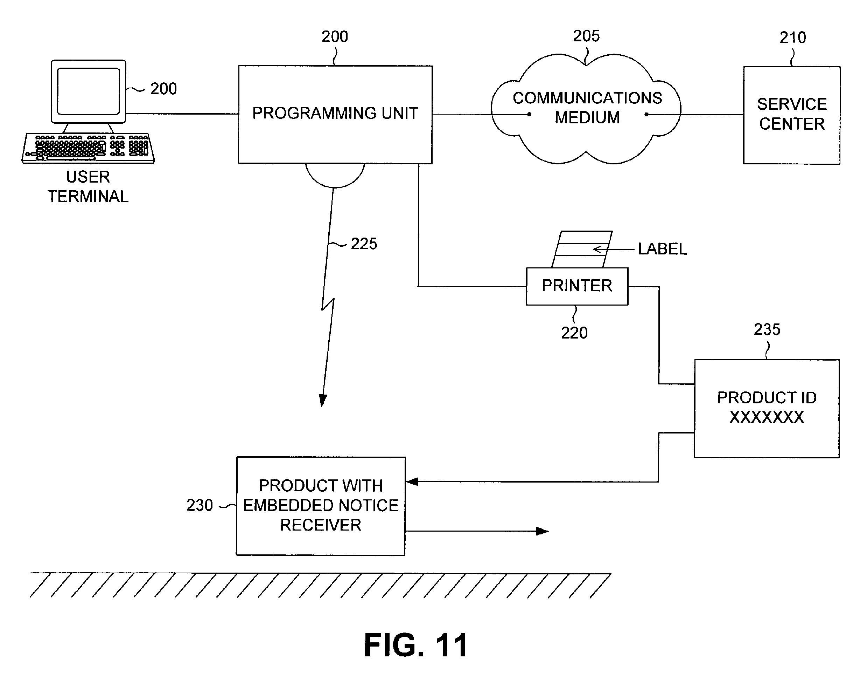

Fig. 11 is a pictorial diagram that illustrates application of one example embodiment of a programming unit. According to this illustrative use case, a programming unit 200 interfaces with some communications medium (e.g. a computer network). It should be noted that any suitable communications medium may be used. As such, the communications medium can include, but is not necessarily limited to a point-to-point interface (e.g. a dial-up modem connection), a computer network and a cellular communications network. These are merely examples of various communications medium that can be used to enable the programming unit 200 to communicate with a service center 210 and these enumerated examples are not intended to limit the scope of the claims appended hereto.

In operation, the programming unit 200 needs to receive a product identifier. Accordingly, one example embodiment of a programming unit 200 includes a product identifier interface, which can comprise a user terminal 202. When the programming unit 200 receive a product identifier, it determines a digital identification number. The programming unit 200 can, according to various embodiment, independently determine a digital identification number or it can obtain a digital identification number from the service center 210. When the programming unit 200 independently determines a digital identification number, one alternative embodiment communicates a correlation of a product identifier and a digital identification number to the service center 210 using the communications medium 205. The programming unit 200 then interacts with an output device 220 (e.g. a printer). The output device 220 is typically configured to prepare an indicia 235 (e.g. a self-adhesive label). The Indicia is prepared with teaching of present method As a target product 230 having included therein a product notice receiver is manufactured, one illustrative use case provides for programming the determined digital identification number into the product notice receiver. According to one alternative embodiment, the programming unit uses a wireless interface 225 for conveying a digital identification number to the target product 230. The indicia prepared by the output device 220 can then be applied to the target product 230.

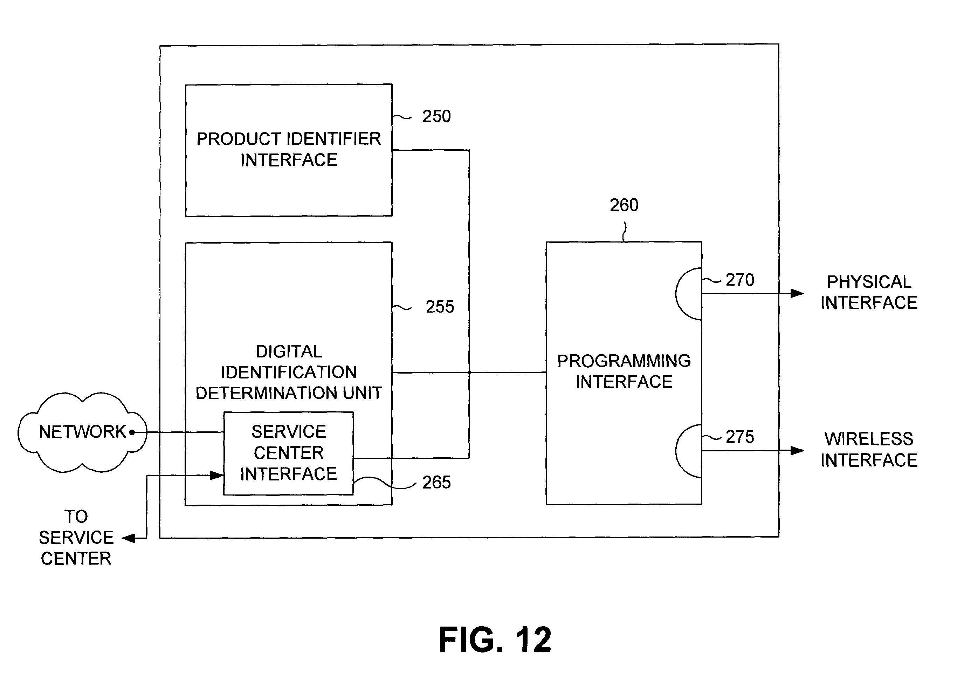

Fig. 12 is a block diagram of one example embodiment of a programming unit. According to this example embodiment, a programming unit 200 comprises a product identifier interface 250, a digital identification determination unit 255 and a programming interface 260. According to this example embodiment, the product identifier interface 250 is capable of receiving a product identifier. The product identifier can include any of various types of product identifiers, including but not limited to a model number, a SKU number, a lot code, a manufacturing date code, and a serial number. The digital identification determination unit 255 receives the product identifier and determines a digital identification number according to said product identifier.

According to one alternative embodiment, the digital identification determination unit 255 generates a digital identification number that includes a product identifier in one example alternative embodiment, the digital identification determination unit 255 uses a received product identifier as the digital identification number.

When the digital identification determination unit 255 determines a digital identification number, one alternative embodiment thereof operates to correlate a determined digital identification number with a product identifier. This alternative embodiment further operates to communicate the correlation to a service center 210.
This communication is accomplished using a service center interface 265 included in one alternative embodiment of the digital identification determination unit 255.

According to yet another alternative example embodiment, the digital identification determination unit 255 includes a service center interface 265. According to this alternative embodiment, the digital identification determination unit 255 uses the service center interface 265 to communicate a product identifier to a service center. The service center can then associate the product identifier with a digital identification number. The digital identification determination unit 255 receives the associated digital identification number from the service center and uses this associated digital identification number as a determined digital identification number. In this case, the service center determines a Digital Identification Number.

According to yet another alternative example embodiment, the digital identification determination unit 255 receives a block of one or more digital identification numbers from a service center using a service center interface 265 included in this alternative example embodiment. Once one or more digital identification numbers are received from the service center, the digital identification determination unit 225 will store these numbers until it receives a product identifier from the product identifier interface 250. At that point, the digital identification determination unit 225 will select a digital identification number from those previously stored. The digital identification determination unit 225 then optionally associates the selected digital identification number with the product identifier and communicates the association (i.e. a correlation) to the service center. Communication of such correlation can be accomplished on a batch basis (i.e. when all of the digital identification numbers in a block have been associated with one or more product identifier.

Fig. 12 further illustrates that once a digital identification number has been determined by the digital identification determination unit 225, the determined digital identification number is conveyed to the programming interface 260. The programming interface then conveys the digital identification number to a product notice receiver. It should be noted that the programming interface can comprise at least one of a wired interface 270 and a wireless interface 275. According to one alternative embodiment, the wireless interface 275 comprises at least one of a SmartChip interface and an RFID interface. As such, a first part of receiving a product notice is accomplished by programming a digital identification number into a product notice receiver by modulating a wireless signal in a first frequency band. According to one alternative embodiment, the wireless interface 275 operates in such a first frequency band. According to yet another alternative embodiment, the first frequency band is selected according to promulgated specifications for at least one of a SmartChip interface and a RFID interface. It should be noted that the various types of first frequency band interfaces are presented here to illustrate one example embodiment, but are not intended to limit the scope of the appended claims.

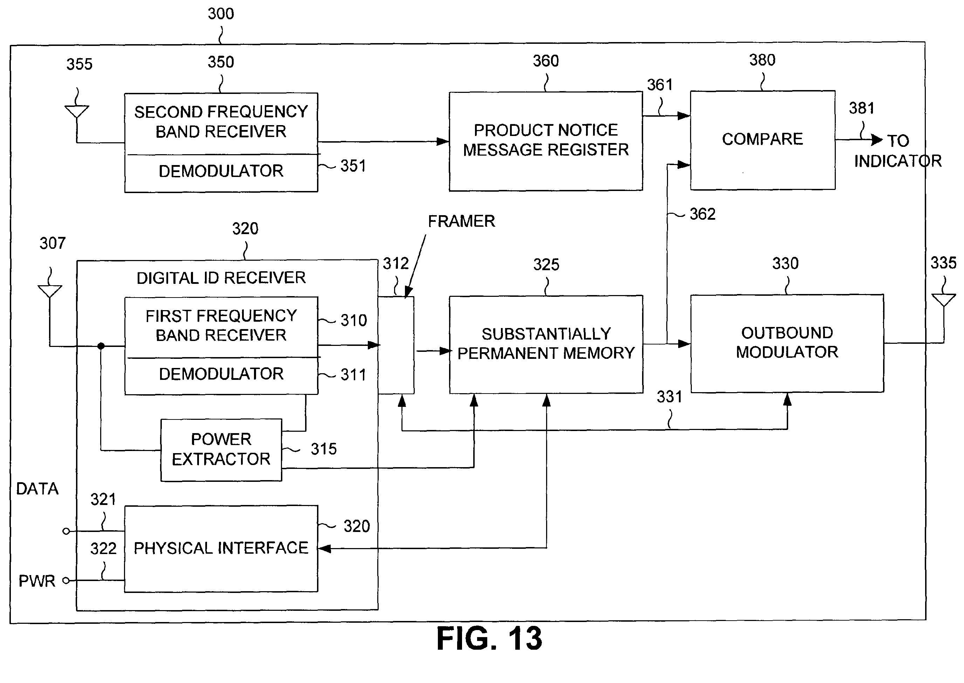

Fig. 13 is a block diagram that depicts one example embodiment of a product notice receiver. According to this example embodiment, a product notice receiver 300 comprises a digital identification receiver 370 and memory 325 for storing a digital identification number received by the digital identification receiver 370. According to one alternative embodiment, the memory 325 comprises a substantially permanent memory. A substantially permanent memory can include, but is not necessarily limited to random access memory that is battery backed-up, a non-volatile memory that can include flash memory, programmable read-only memory and fusible-link memory. This enumeration of substantially permanent memory is presented here to illustrate various possible embodiments and is not intended to limit the scope of the claims appended hereto. Any type of memory may be used to store the digital identification number so long as the memory is capable of retaining the digital identification number when the product notice receiver 300 is otherwise substantially unpowered.

According to one alternative embodiment of a product notice receiver 300, a digital identification receiver 370 comprises a physical interface 320. According to this alternative embodiment, the physical interface 320 comprises a data port 321 and a power port 322. Accordingly, a digital identification number is received by way of the data port 321 while power to power a portion of the product notice receiver 300 is received by way of the power port 322. According to yet another alternative embodiment of the product notice receiver 300, a digital identification receiver 370 comprises a first frequency band receiver 310, a demodulator 311 and a framer 312. According to this alternative embodiment, the first frequency band receiver 310 receives a radio signal in a first frequency band using an antenna 307. It should be noted that the antenna 307 need not necessarily be included in this alternative embodiment of a product notice receiver 300. The demodulator 311 demodulates the first frequency band signal in order to extract a bit stream which is presented to the framer 312. The framer 312 and then extracts the digital identification number from the bit stream (i.e. the demodulated signal). According to yet another alternative embodiment, the digital identification receiver 370 further includes a power extractor 315. The power extractor 315 receives electromagnetic energy using the antenna 307 controversy portion of the electromagnetic energy into electrical power. This electrical power, according to one alternative embodiment, is provided to the first frequency band receiver 310, the demodulator 311, the framer 312 and the memory 325.

According to one alternative embodiment, a product notice receiver 300 further includes an outbound demodulator 330. According to this alternative embodiment, the framer 312 is capable of generating identifier request signal according to a demodulated first frequency band radio signal. As such, the outbound modulator 330 responds to the identifier request signal 331 by retreating in digital identification number from the memory 325 in generating a modulated signal according to said digital identification number. The modulated signal can then be radiated using an antenna 335. It should be noted that the antenna 335 need not necessarily be included in this alternative embodiment of a product notice receiver 300.

According to yet another alternative embodiment, a product notice receiver 300 further comprises a second frequency band receiver 350, a second demodulator 351, a product notice message register 360 and a comparator 380. Once a digital identification number is available in the substantially current memory 325, the product notice receiver 300 is ready to receive a product notice. Accordingly, a radio signal in a second frequency band is received using an antenna 355. It should be noted that the antenna 355 is not necessarily included in this alternative embodiment of the product notice receiver 300. The second frequency band receiver 350 selects a second frequency band signal and directs it to the demodulator 351. The demodulator 351 generates a bit stream according to the second frequency band signal. The bit stream is then directed to the product notice message register 360, which imposes a product notice message according to the bit stream received from the demodulator 351. According to this alternative embodiment, the product notice message register 360 imposes a product notice message that includes a target identifier. The target identifier 361 is then compared with the digital identification number 362 provided by the substantially current memory 325. Accordingly, the comparator 380 generates a comparison signal 381 by comparing the digital identification number 362 to a portion 361 of the product notice message composed by the product notice message register 360.

While the present method and apparatus has been described in terms of several alternative and exemplary embodiments, it is contemplated that alternatives, modifications, permutations, and equivalents thereof will become apparent to those skilled in the art upon a reading of the specification and study of the drawings. It is therefore intended that the true spirit and scope of the claims appended hereto include all such alternatives, modifications, permutations, and equivalents.

It should be noted that references to a first frequency band are intended to include short wavelength radio signals, for example frequencies above 50 MHz. References to a second frequency band are intended to include long wavelength radio signals, for example frequencies below 50 MHz. These threshold frequencies for the first and second frequency band are intended to illustrate one illustrative use case and are not intended to limit the scope of the claims appended hereto. One criterion for selecting a proper first frequency band includes the ability of a radio signal in the first frequency band to have a short range capability typically associated with wireless networks or inventory management transponders (e.g. RFID chips). One object of such a selection criteria is to avoid interference with other product notice receivers outside of a particular operational range. One criterion for selecting a proper second frequency band includes the ability of a radio signal in the second frequency band to permeate a large coverage area irrespective of obstacles that may be found between a transmitter and a product notice receiver. Yet another criterion useful in selection of a second frequency band is reduction in multi-path errors associated with radio transmission. For example, a short wavelength signal (e.g. 1 GHz) is more likely to reflect off of an object and yield a multi-path signal that is experienced by a product notice receiver. A long wavelength signal is more likely to penetrate through an object with little reflection. This reduces the amount of multi-path signal experienced by the product notice receiver.

## Claims

1. A method for programming a product notice receiver comprising:
determining a digital identification number; and
programming the digital identification number into the product notice receiver after it is received by a host product manufacturer.

2. The method of Claim I further comprising providing the determined digital identification number to a service center.

3. The method of Claim 1 further comprising providing a product identifier that corresponds to the determined digital identification number to a service center.

4. The method of Claim 1 further comprising verifying that the product notice receiver accurately received the determined digital identification number.

5. The method of Claim 1 wherein determining a digital identification number comprises:
providing a product identifier to a service center; and
obtaining a digital identification number from the service center.

6. The method of Claim 1 wherein determining a digital identification number comprises generating a digital identification number that includes a product identifier.

7. The method of Claim 1 wherein determining a digital identification number comprises:
receiving a block of digital identification numbers;
selecting a digital identification number from block.

8. The method of Claim 1 wherein programming the digital identification number into the product notice receiver comprises:
establishing a physical communication connection with the product notice receiver; and
conveying the digital identification number to product notice receiver using the physical communication connection.

9. The method of Claim 1 wherein programming the digital identification number into the product notice receiver comprises radiating a signal according to the digital identification number.

10. The method of Claim 1 wherein programming the digital identification number into the product notice receiver comprises radiating a short range SmartChip compliant signal according to the digital identification number.

11. The method of Claim 1 further comprising preparing indicia for a target product.

12. A method for receiving a product notice comprising:
receiving a digital identification number from a programming unit; and
storing the digital identification number in the product notice receiver in a substantially permanent manner.

13. The method of Claim 12 wherein receiving a digital identification number comprises receiving a digital identification number by way of a physical communications connection.

14. The method of Claim 12 wherein receiving a digital identification number comprises:
receiving a modulated radio signal in a first frequency band;
demodulating the first frequency band radio signal; and
extracting a digital identification number from the demodulated signal.

15. The method of Claim 14 further comprising converting the modulated first frequency band radio signal into a power source and powering at least a portion of the product notice receiver from said power source.

16. The method of Claim 14 further comprising:
receiving a modulated radio signal in a second frequency band;
demodulating the second frequency band radio signal; and
composing a product notice message according to the demodulated second frequency band radio signal;
comparing a product digital identifier in the product notice message to the digital identification number; and
notifying a product user according to the comparison.

17. The method of Claim 14 further comprising:
receiving a request for the digital identification number by means of a modulated radio signal in the first frequency band;
generating a modulated radio signal in the first frequency band according to the digital identification number; and
radiating the generated modulated first frequency band radio signal.

18. A programming unit comprising:
digital identification determination unit capable of determining a digital identification number; and
programming interface for conveying the digital identification number to a product notice receiver.

19. The programming unit of Claim 18 wherein the programming unit further comprises a service center interface capable of communicating a determined digital identification number to a service center.

20. The programming unit of Claim 18 wherein the programming unit further comprises a service center interface capable of communicating a product identifier that corresponds to the determined digital identification number to a service center.

21. The programming unit of Claim 18 wherein the programming interface is further capable of receiving a digital identification number from the product notice receiver.

22. The programming unit of Claim 18 wherein digital identification determination unit comprises:
product identifier interface capable of receiving a product identifier; and
service center interface capable of communicating the product identifier to a service center and further capable of receiving a digital identification number from the service center.

23. The programming unit of Claim 18 wherein digital identification determination unit comprises:
product identifier interface capable of receiving a product identifier and generates a digital identification number that includes the product identifier.

24. The programming unit of Claim 18 wherein digital identification determination unit comprises:
service center interface capable of receiving a block of digital identification numbers;
storage unit for storing the received block of digital identification numbers; and
selection unit that selects a digital identification number from the storage unit.

25. The programming unit of Claim 18 wherein the programming interface comprises a physical interface.

26. The programming unit of Claim 18 wherein the programming interface comprises a wireless interface.

27. The programming unit of Claim 18 wherein the programming interface comprises a Smart Chip interface.

28. The programming unit of Claim 18 further comprising an indicia preparation device.

29. A product notice receiver comprising:
digital identifier receiver capable of receiving a digital identification number; and
substantially permanent memory for storing the digital identification number.

30. The product notice receiver of Claim 29 wherein the Digital identifier receiver comprises physical interface.

31. The product notice receiver of Claim 29 wherein the Digital identifier receiver comprises:
receiver capable of receiving a signal in a first frequency band;
demodulator for demodulating the first frequency band signal; and
framer capable of extracting a digital identification number from the demodulated first frequency band signal.

32. The product notice receiver of Claim 31 further comprising a power extractor that generates power for at least a portion of the digital identifier receiver and the substantially permanent memory by converting into power a portion of the modulated signal in the first frequency band.

33. The product notice receiver of Claim 31 wherein the framer is capable of generating an identifier request signal according to the demodulated first frequency band signal further comprising an outbound signal modulator capable of generating an outbound signal according to the digital identification signal when the identifier request signal is active.

34. The product notice receiver of Claim 29 further comprising:
receiver capable of receiving a signal in a second frequency band;
demodulator capable of demodulating the second frequency band signal;
product notice message register capable of composing a product notice message according to the demodulated second frequency band signal;
comparator capable of generating a comparison signal by comparing the digital identification number to a portion of the product notice message; and
indicator output capable of providing an indication according to the comparison signal.
